# EUROPEAN PATENT APPLICATION

(11) **EP 1 548 727 A2**
(43) Date of publication of application: **29.06.2005**
(21) Application number: 04027750.1
(22) Date of filing: 23.11.2004
(51) Int. Cl.: G11B 17/028, G11B 17/04

(54) **Disk drive having a unit for preventing falling-off of a transverse unit**

(30) Priority: 28.11.2003 JP 2003398765
(71) Applicant: ORION ELECTRIC CO., Ltd., Takefu-shi, Fukui 915-8555 (JP)
(72) Inventor: Makino, Takeshi, Orion Electric Co., Ltd., Takefu-shi Fukui, 915-8555 (JP)
(74) Representative: VOSSIUS & PARTNER

(57) **Abstract**

In order to provide a disk drive in which strength in the connection between a traverse unit and a body frame is improved, and reliability is high so that an attached traverse unit does not fall off; the disk drive includes a traverse unit (11) having a traverse holder (18) holding a front end of a traverse chassis (17) and being formed from a front (20) holding the front end of the traverse chassis and both support arms (21, 21) extending rearward from both ends of the front. Each of the support arms is integrally provided with an upwardly protruded vertical-rib (21 c) and its end and base have a protrusive shaft (21 a) and a guide boss (21 b), which are protruded outward, respectively. On both sidewalls (24a, 24b) of the body frame (10), vertical guide grooves (23a, 23a) into which guide bosses on the support arms fit, guide ribs (27a, 27a and 27b, 27b) drooping parallel via spaces into which the vertical ribs fit, and horizontal support ribs (29a, 29b) for rotatably pinching the protrusive shafts on the traverse holder between them and the guide ribs are integrally molded using a resin material. The protrusive shafts on the traverse holder are pinched by the guide ribs and both the horizontal support ribs, thereby the shafts become pivots of rotation of the traverse holder, the vertical ribs on the support arms are fitted into spaces between the guide ribs, thereby a lateral position of the traverse unit is regulated, and the guide bosses are freely fitted into the vertical guide grooves and the boss protruded from the front is freely fitted into the cam groove on the slide cam body, thereby vertical movement of the traverse unit is regulated.

## Description

The present invention relates to a disk drive having a unit for preventing falling-off of a traverse unit.

In a disk drive using a tray for conveying a disk, the disk placed on the tray is carried in with the tray to a reproduction position, at which a traverse unit moves upward and the disk is mounted on a turntable and then damped. Conversely, when a reproduced disk is removed, the traverse unit is moved downward, thereby the disk mounted on the turntable is placed on the tray and then carried out with the tray.

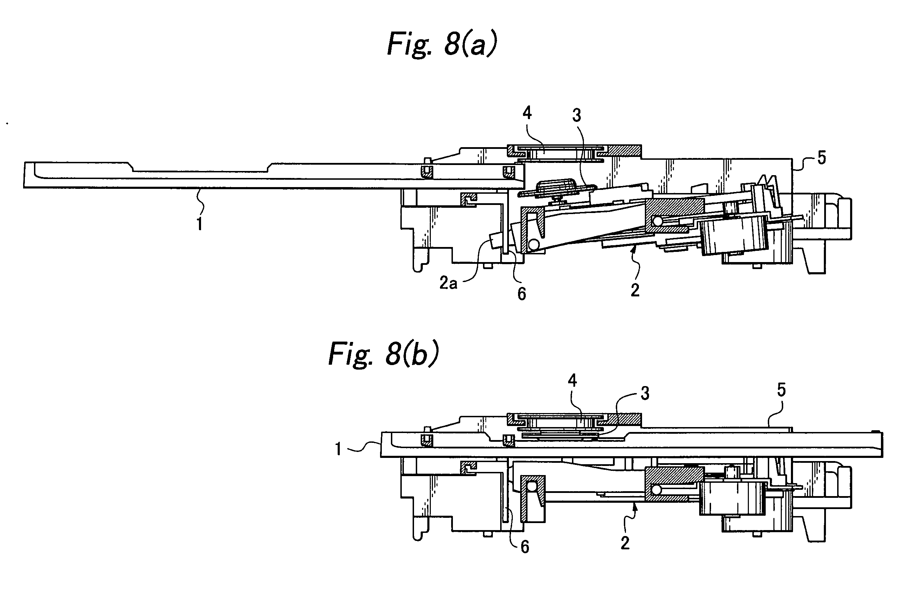

Basic movement of such a tray-type disk drive is described according to drawings. As shown in a side cross-sectional view in Fig.8(a), a traverse unit 2 indines downward in a condition after a tray 1 has been carried out. When a disk is placed on the tray 1 and carried in into the drive, the traverse unit 2 moves upward and the disk is mounted on a turntable 3, and then pinched and damped by a damper 4 (see Fig.8(b)).

The traverse unit 2 is attached to a frame 5, and a traverse holder moves up and down with a rear end as the fulcrum. The traverse unit 2 is provided with the turntable 3 and an optical pickup, and then attached to the frame. That is, the traverse unit 2 is configured in a way that it is obliquely inserted into a space formed in the frame 5, stably supported by a holding mechanism, and does not rattle.

A boss 2a is provided at an end of the traverse unit 2, the boss 2a fits into a cam groove of a slide cam body 6, and the slide cam body 6 slides left and right (slides in a depth direction on Fig.8(a) and Fig.8(b)), thereby the traverse unit 2 moves up and down.

In "Disk Recording or Playback Device and Method for Assembling the Device" according to JP-A-2003-196951, in order to improve workability in attaching a mechanism deck (traverse unit) and correctly move the mechanism deck up and down even if shock is applied externally, the mechanism deck, which has a turntable for rotating a disk and vertically moves in cooperation with a slide body, has a sub-chassis attached with the turntable and a frame (traverse holder) that fits into the slide body and supports the sub-chassis. In the chassis (body frame), a holding mechanism is provided, which vertically swingably supports the frame in a position fitted into the slide body through a space between a damper support plate and the chassis. From the frame, a protrusive shaft, which is supported by the holding mechanism and regulates vertical rattle of the frame, is outwardly provided, and the protrusive shaft has a projection for preventing lateral rattle of the frame.

According to the configuration, since the mechanism deck can be attached to the chassis with the damper support plate being attached to the chassis, the workability is improved. In addition, since the protrusive shaft is supported by the holding mechanism and thus the vertical rattle is regulated, the mechanism deck does not fall out from the slide body and the chassis even if shock is externally applied. Therefore, the mechanism deck can be correctly moved up and down.

However, in the connection between the frame (traverse holder) and the chassis (body frame), since a large opening is formed in the chassis to form a regulating part, strength of the chassis is lowered, resulting in reduction in reliability of products. In addition, since a through-hole for a space into which the protrusive shaft enters is formed in a sidewall of the chassis, a slide core die is necessary for forming a receiving part of the traverse holder in a die for molding the chassis (body frame) of a disk drive in addition to a two-face die of a cavity die and core die, and therefore the die becomes complicated. Since the projection formed on the protrusive shaft of the frame attached to the chassis is formed at a fixed angle with respect to a horizontal face in consideration with assemble workability, the die for the frame (traverse holder) also becomes complicated.

In this way, the conventional disk drive has problems as above. Issues to be solved by the invention are these problems, and an object of the invention is to provide a disk drive in which the strength in the connection between the traverse holder and the body frame is improved, and reliability is high so that the attached traverse unit does not fall off. Furthermore, another object of the invention is to provide a disk drive, which allows a pattern of the die for molding the frame and the traverse holder to be simplified.

The disk drive having a unit for preventing falling-off of the traverse unit according to the invention is configured to include a traverse unit having a traverse chassis attached with a component such as a tumtable and optical pickup, a traverse holder holding a front end of the traverse chassis, a body frame for mounting the traverse unit, and a laterally movable slide cam body disposed at a front side of the traverse unit, a rear end of the traverse chassis being connected to the body frame via an elastic ring; wherein the traverse holder is formed from a front holding the front end of the traverse chassis and both support arms extending rearward from both ends of the front, the front has a boss protruding forward and freely fits into a cam groove in the slide cam body, and each of the support arms is integrally provided with an upwardly protruded vertical-rib and its end and base have a protrusive shaft and a guide boss, which are protruded outward, respectively; on both sidewalls of the body frame, vertical guide grooves into which guide bosses on the support arms fit, guide ribs drooping parallel via spaces into which the vertical ribs fit, and horizontal support ribs for rotatably pinching the protrusive shafts on the traverse holder between them and the guide ribs are integrally molded using a resin material; the protrusive shafts on the traverse holder are pinched by the guide ribs and both the horizontal support ribs, thereby the shafts become pivots of rotation of the traverse holder, the vertical ribs on the support arms are fitted into spaces between the guide ribs, thereby a lateral position of the traverse unit is regulated, and the guide bosses are freely fitted into the vertical guide grooves and the boss protruded from the front is freely fitted into the cam groove on the slide cam body, thereby vertical movement of the traverse unit is regulated.

According to such a configuration, the traverse unit can be inserted into the body frame from an underside portion of the body frame and mounted therein; and the protrusive shafts on the traverse holder are rotatably pinched by both the horizontal support ribs and the guide ribs, thereby become pivots of rotation of the traverse holder without rattle; the vertical ribs on the support arms are fitted into the space between the guide ribs, thereby a lateral position of the traverse unit is regulated; and the guide bosses are freely fitted into the vertical guide grooves and the boss protruded from the front is freely fitted into the cam grooves of the slide cam body, thereby vertical movement of the traverse unit is regulated. Therefore, the traverse unit does not fall off from the frame. In addition, the supporting, horizontal support ribs and the guide ribs are integrally molded with the body frame, similarly, the vertical guide grooves into which the guide bosses are freely fitted are integrally molded with the body frame, thereby high strength can be obtained.

The horizontal support rib formed on one sidewall may be configured in a way that a back-and-forth long-hole into which the protrusive shaft fits is formed at a position facing to the guide rib and thus the rib is formed as a lower edge of the long hole, and the horizontal support rib on the other sidewall may be configured in a way that it is protruded inwardly from a lower end of the sidewall, and an insertion into which one of the protrusive shafts can be inserted is formed adjacently to the horizontal support rib.

The horizontal support rib and the guide rib on the other sidewall can be integrally molded into an overhang inwardly overhanging from the sidewall. The guide rib may comprise a high guide-rib-part having a longer drooping length, a shorter, low guide-rib-part, and an inclined guide-rib-part connecting between the high and low guide-rib parts.

According to the disk drive of the invention, in the case that the traverse unit is attached to the body frame, when it is obliquely inserted from a bottom side of the body frame to an inner space of the body frame, the protrusive shafts on the traverse holder are placed and supported on the horizontal support ribs formed on the body frame, and their upper sides contact to the guide ribs, in addition, the lateral position is regulated because the vertical ribs on the support arms fit into the spaces between the guide ribs, and thus the traverse unit is supported without rattle. Furthermore, the guide bosses on the traverse unit freely fit into the vertical guide grooves formed on the body frame, thereby the traverse unit stably moves up and down, and does not fall off from the frame.

The horizontal support ribs, guide ribs, and vertical guide grooves are integrally molded with the body frame using a resin material, therefore strength is high. Furthermore, when the horizontal support ribs, guide ribs, and vertical guide grooves are integrally molded with the body frame, a slide core mold is not necessary, and they can be produced only by a combination of upper and lower molds, therefore the die is easily produced.
Fig.1 is a plan view showing an internal structure in a carrying-out condition of a tray in a disk drive according to an embodiment of the invention;
Fig.2 is a plan view showing an internal structure in a carrying-in condition of the tray in the disk drive;
Figs.3(a), 3(b) and 3(c) are a plan view, front view and right side view showing a traverse unit of the disk drive, respectively;
Fig.4 is a bottom view showing a condition where the traverse unit is attached to a body frame;
Fig.5 is a perspective view showing the body frame from a bottom side;
Fig.6 is a side view showing a relation between a long hole in a sidewall of the frame and a guide rib;
Fig.7 is a longitudinal section view showing a condition where the traverse unit is held in a holding mechanism provided on the sidewall of the body frame;
Fig.8(a) is a side cross-sectional view showing a carrying-out condition of a tray for explaining basic movement of a tray-type disk drive, and Fig.8(b) is a side cross-sectional view showing a carrying-in condition of the tray.

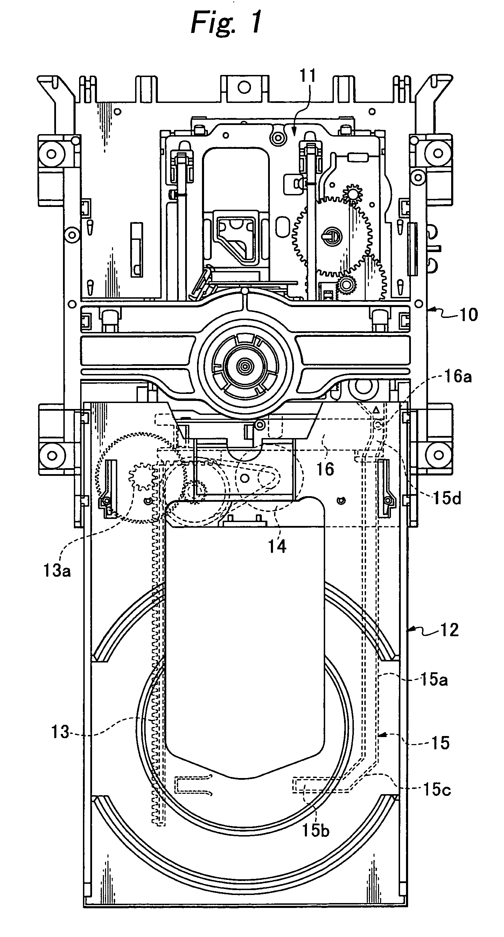

Fig.1 shows an internal structure of a disk drive according to an embodiment of the invention, which has a body frame 10 integrally molded using a resin material, a traverse unit 11 arranged in the frame, and a tray 12 in a carrying-out condition. A circular, shallow groove is formed on a top of the tray 12, and a disk fits into the groove to be set. A tray rack 13 is provided in a back-and-forth direction at a bottom side of the tray 12, and a tray conveyance gear 13a engages with the tray rack 13. The tray conveyance gear 13a is rotationally driven by a feed motor 14, and the rotation of the tray conveyance gear 13a allows the tray 12 to advance or back a defined distance between a disk replacement position and a disk reproduction position.

Furthermore, an approximately L-shaped tray-guide-groove 15 is provided along the tray rack 13 on a bottom side of the tray 12. The tray guide groove 15 comprises a longitudinal guide groove 15a extending parallel to the tray rack 13, a lateral guide groove 15b perpendicular to the tray rack 13, and a comer guide groove 15c formed between the longitudinal guide groove 15a and the lateral guide groove 15b. In addition, a curved-portion 15d having a small curvature is provided at a rear end of the longitudinal guide groove 15a.

A laterally movable slide cam body 16 is disposed at a front side of the traverse unit 11 in the body frame 10, and a cam rod boss 16a is jutted out on the slide cam body 16.

The cam rod boss 16a freely fits into the tray guide groove 15. When the tray 12 advances toward the disk replacement position and the cam rod boss 16a freely fitting into the longitudinal guide groove 15a reaches the curved portion 15d, the tray 12 stops. When the tray 12 backs and the cam rod boss 16a freely fitting into the longitudinal guide groove 15a reaches the corner guide groove 15c, the tray 12 stops. That is, the cam rod boss 16a moves along the tray guide groove 15, and the slide cam body 16 also moves along the tray guide groove 15.

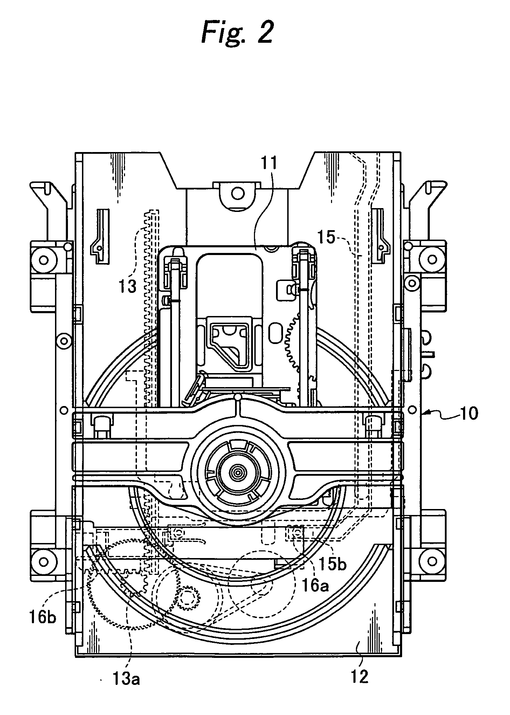

When the tray 12 backs and the cam rod boss 16a reaches the comer guide groove 15c of the tray guide groove 15, as shown in Fig.2, the slide cam body 16 moves left, and the tray conveyance gear 13a disengaged from the tray rack 13 engages with a slide cam body rack 16b provided at an end of the slide cam body 16. Then, as the tray conveyance gear 13a continues to rotate, the cam rod boss 16a slides along the lateral guide groove 15b, thereby the slide cam body rack 16b is fed right and the slide cam body 16 moves right.

In a condition where the disk placed on the tray is in the disk reproduction position after the tray has backed, when the traverse unit 11 moves up, the disk is mounted on the tumtable and damped by the damper. Then, an optical pickup moves with the rotation of the disk and recording or reproduction is performed.

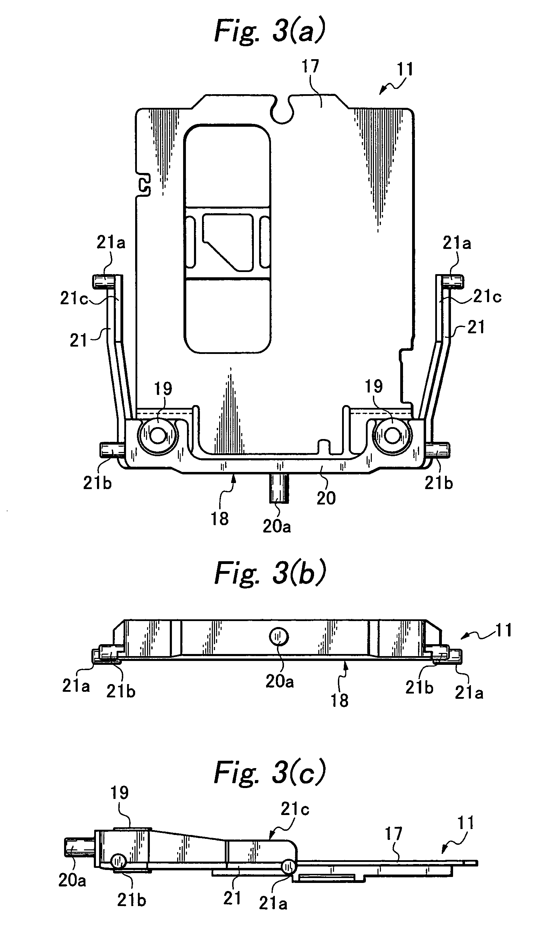

The traverse unit 11, as shown in Figs.3(a), 3(b) and 3(c), comprises a traverse chassis 17 and a traverse holder 18, and the traverse chassis 17 is connected to the traverse holder 18 via elastic rings 19, 19. The traverse holder 18 is formed in an approximately U shape having a front 20 and both support arms 21, 21. A boss 20a protrudes to a front side in a center of the front 20, a protrusive shaft 21 a protrudes outwardly from each of ends of the support arms 21, and a guide boss 21 b protrudes outwardly from each of bases of the support arms 21.

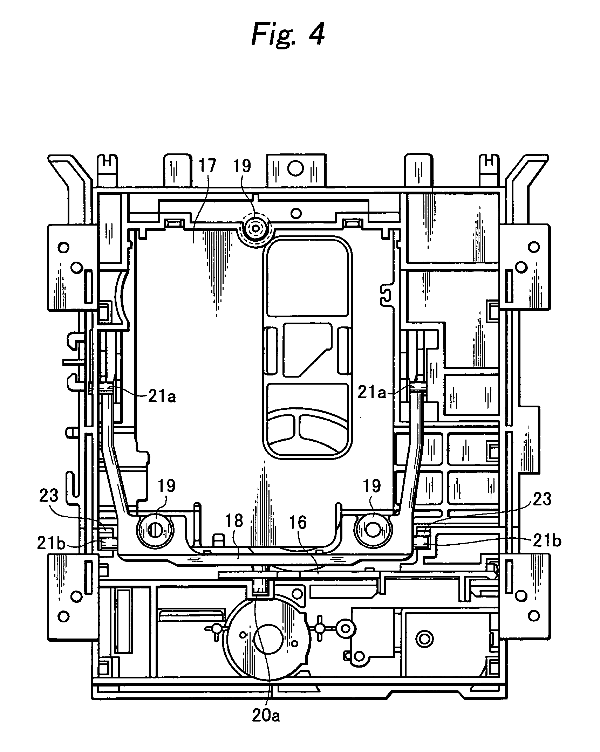

The traverse chassis 17 is attached with the tumtable and the optical pickup (not shown), and the traverse unit 11 configured in this manner is mounted on the body frame 10 of the disk drive. Fig.4 shows the condition from a bottom side of the unit, where the traverse unit 11 is mounted on the body frame 10. A rear end of the traverse chassis 17 of the traverse unit 11 is connected to the body frame 10 via the elastic rings 19, and both protrusive shafts 21 a, 21 a and the guide bosses 21 b, 21 b on the traverse holder 18 are supported by the body frame 10 as described later.

The boss 20a provided on the front 20 of the traverse holder 18 fits into a stepwise cam groove (not shown) provided in the slide cam body 16, and the traverse unit 11 moves up and down by left-and-right movement of the slide. In this case, the protrusive shafts 21 a, 21a work as base shafts or pivots for the vertical movement of the traverse unit 11, and the guide bosses 21 b, 21 b slide vertically along the vertical guide grooves.

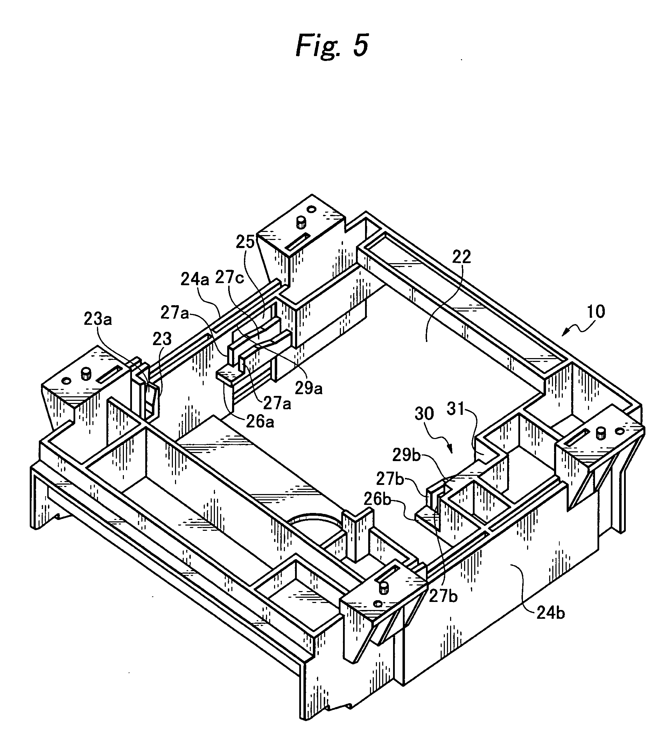

In the body frame 10 mounted with the traverse unit 11, as shown in Fig.5, a holding mechanism and a vertical guide groove 23a are formed so that the traverse unit 11 can be inserted obliquely from its bottom side into an inner space 22 and mounted therein. One end side of the holding mechanism is configured in a way that a long hole 25 into which the protrusive shaft 21 a fits is formed in a sidewall 24a of the body frame, and guide ribs 27a, 27a are formed against the sidewall 24a at a position of the long hole 25 with a predetermined interval. Here, a horizontal support rib 29a is formed at a lower side (upper side on Fig.5) of the long hole 25.

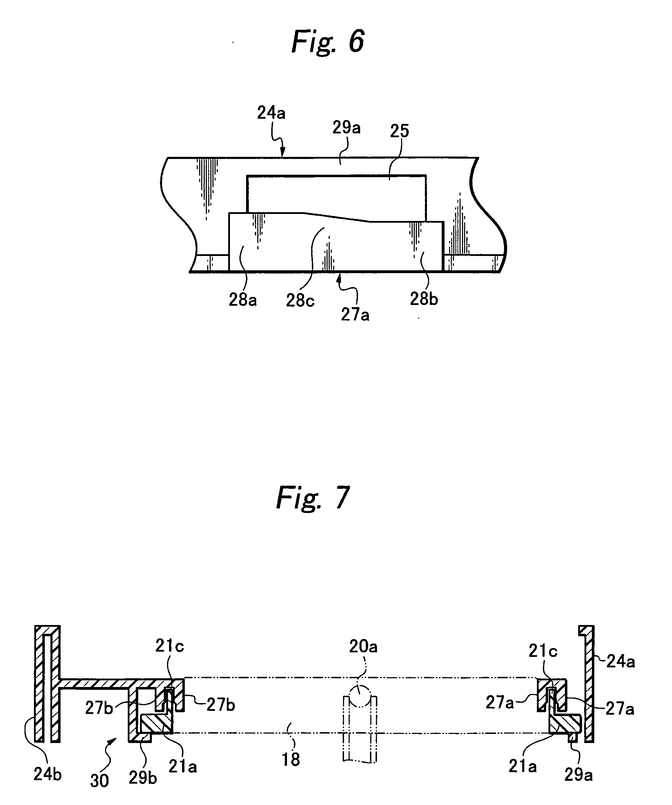

The guide ribs 27a, 27a rise from a base 26a extending inwardly from the sidewall 24a, and are parallel to each other. Each guide rib 27a comprises a high guide-rib-part 28a, low guide-rib-part 28b, and an inclined guide-rib-part 28c, which are different in height. Accordingly, height formed within the long hole 25 and the horizontal support rib 29a varies such that it is minimum at the high guide-rib-part 28a and maximum at the low guide-rib-part 28b (see Fig.6). The protrusive shaft 21 a provided in the traverse holder 18 forming the traverse unit fits into a low-guide-rib 28b side of the long hole 25, and then moves to a high-guide-rib 28a side to be positioned.

On the other hand, an overhang 30 that largely overhangs to the inside is provided on a sidewall 24b at the other side, and an inwardly protruded horizontal-support-rib 29b is formed on the overhang 30. Similarly as the sidewall 24a side, a base 26b protrudes from the overhang 30, and guide ribs 27b, 27b rise from the base 26b. Although there is no hole provided in the overhang side, an insertion 31 is formed by cutting off the horizontal support rib 29b.

When the traverse unit is mounted, one protrusive shaft 21a is inserted into the low guide-rib-part 28b side of the long hole 25, and the other protrusive shaft 21 a is fitted into the insertion 31. Both protrusive shafts 21 a, 21 a are moved along the guide ribs 27a, 27a, and can be fitted into spaces between the high guide-rib-parts 28a and the horizontal support ribs 29a, 29b without rattle. On the other hand, the guide bosses 21 b, 21 b on the traverse holder 18 are freely fitted into the vertical guide grooves 23a, 23a formed along the vertical guides 23, 23.

Fig.7 shows a condition where the traverse unit 11 is positioned and held by the holding mechanism provided on the sidewalls 24a, 24b of the body frame. That is, both protrusive shafts 21a, 21a on the traverse holder 18 fit into spaces between the horizontal support ribs 29a, 29b on the sidewalls 24a, 24b of the body frame and the guide ribs 27a, 27b respectively, thereby vertical positioning is carried out. Vertical ribs 21 c protrude from respective support arms 21 having protrusive shafts 21 a at their ends, and the vertical ribs 21 c are fitted into respective spaces 27c formed between both guide ribs 27a, 27a and between the ribs 27b, 27b, thereby a lateral position is regulated. In addition, the guide bosses 21 b, 21 b are fitted into the vertical guide grooves 23a, 23a respectively, thereby the position of the disk drive is regulated in the back-and-forth direction (slide direction of the tray), and therefore the traverse unit 11 does not fall off from the body frame 10.

The horizontal support rib 29a can be formed, rather than through forming the long hole 25, in an inwardly protruded mode from the sidewall 24a similarly as in the horizontal support rib 29b formed on the other sidewall 24b. In this case, an insertion is provided similarly as the insertion 31 provided adjacently to the horizontal support rib 29b. In any mode, the vertical rib fits into the space between the guide ribs and thus the lateral positioning is performed, thereby the traverse unit is supported without rattle, and the advantages can be similarly obtained.

The front boss 20a on the traverse holder 18 freely fits into the slide cam body groove, and the slide cam body 16 slides left and right, thereby the boss 20a vertically moves, at the same time the traverse unit 11 moves up and down.

## Claims

1. A disk drive having a unit for preventing falling-off of a traverse unit, comprising,
a traverse unit (11) having a traverse chassis (17) attached with a component such as a tumtable and optical pickup, a traverse holder (18) holding a front end of the traverse chassis, a body frame (10) for mounting the traverse unit, and a laterally movable slide cam body (16) disposed at a front side of the traverse unit, a rear end of the traverse chassis being connected to the body frame via an elastic ring (19), **characterized in that**
the traverse holder (18) is formed from a front (20) holding the front end of the traverse chassis and both support arms (21, 21) extending rearward from both ends of the front, the front (20) has a boss (20a) protruding forward and freely fits into a cam groove in the slide cam body, and each of the support arms is integrally provided with an upwardly protruded vertical-rib (21c) and its end and base have a protrusive shaft (21 a) and a guide boss (21 b), which are protruded outward, respectively,
on both sidewalls (24a, 24b) of the body frame (10), vertical guide grooves (23a, 23a) into which guide bosses (21 b, 21 b) on the support arms (21, 21) fit, guide ribs (27a, 27a and 27b, 27b) drooping parallel via spaces into which the vertical ribs (21 c, 21 c) fit, and horizontal support ribs (29a, 29b) for rotatably pinching the protrusive shafts (21 a, 21 a) on the traverse holder between them and the guide ribs are integrally molded using a resin material,
the protrusive shafts (21 a, 21 a) on the traverse holder are pinched by the guide ribs and both the horizontal support ribs, thereby the protrusive shafts become pivots of rotation of the traverse holder, the vertical ribs (21 c, 21 c) on the support arms are fitted into spaces (27c, 27c) between the guide ribs, thereby a lateral position of the traverse unit is regulated, and the guide bosses (21 b, 21 b) are freely fitted into the vertical guide grooves (23a, 23a) and the boss (20a) protruded from the front is freely fitted into the cam groove on the slide cam body, thereby vertical movement of the traverse unit is regulated.

2. The disk drive according to claim 1, wherein the horizontal support rib (29a) on one sidewall (24a) is formed in a way that a back-and-forth elongated long-hole (25) into which the protrusive shaft (21 a) fits is formed at a position facing to the guide rib (27a) and thus the horizontal support rib is formed as a lower edge of the long hole, and the horizontal support rib (29b) on the other sidewall (24b) is formed in a way that it is protruded inwardly from a lower end of the sidewall, and an insertion (31) into which the protrusive shaft can be inserted is formed adjacently to the horizontal support rib.

3. The disk drive according to daim 2, wherein the horizontal support rib (29b) and the guide rib (27b) on the other sidewall (24b) are formed as an overhang (30) overhanging inwardly from the sidewall.

4. The disk drive according to daim 1, 2 or 3, wherein the guide rib (27a or 27b) comprises a high guide-rib-part (28a) having a longer drooping length, a shorter, low guide-rib-part (28b), and an indined guide-rib-part (28c) connecting between the high and low guide-rib-parts.
